# DEMANDE DE BREVET EUROPEEN

(11) **EP 4 266 188 A1**
(43) Date de publication de la demande: **25.10.2023**
(21) Numéro de dépôt: 23168490.3
(22) Date de dépôt: 18.04.2023
(51) Int. Cl.: G06F 16/23, G06F 16/27

(54) **PROCÉDÉ DE GESTION D'UNE BASE DE DONNÉES PARTAGÉE ET SYSTÈME EMBARQUÉ ASSOCIÉ**

(30) Priorité: 20.04.2022 FR 2203618
(71) Demandeur: THALES, 92400 Courbevoie (FR)
(72) Inventeur: HERNOUST, Thibault, 33700 MERIGNAC (FR); BRUGIER, Paul, 33700 MERIGNAC (FR); EOZENOU, Frédéric, 33700 MERIGNAC (FR)
(74) Mandataire: Lavoix

(57) **Abrégé**

Procédé de gestion d'une base de données partagée par une pluralité de systèmes embarqués (4), chaque système embarqué (4) étant implémenté dans une plateforme respective (2), chaque système embarqué (4) comprenant une réplique (6) de la base de données, et étant relié à chaque autre système embarqué (4) de la pluralité de systèmes embarqués (4) par une liaison de données, chaque réplique (6) comprenant un ensemble d'éléments, chaque élément comprenant une valeur, un numéro de version associé à cette valeur, et un nom de source associé à ce numéro de version, le nom de source indiquant le nom de la plateforme (2) comprenant le système embarqué (4) générant la valeur de l'élément selon ledit numéro de version, le procédé de gestion comprenant des étapes de :
- modification de la valeur d'au moins un élément ;
- incrémentation du numéro de version ;
- changement du nom de source.

## Description

La présente invention concerne un procédé de gestion d'une base de données partagée.

La présente invention concerne également un produit programme d'ordinateur.

L'invention concerne en outre un système embarqué.

L'invention concerne le domaine de la gestion d'une base de données implémentée dans un système embarqué, notamment dans un système avionique.

On connaît un procédé gestion d'une base de données partagée du FR 3101975 de la Demanderesse. Ce procédé concerne la gestion d'une base de données qui est partagée par plusieurs applications comprenant des répliques de la base de données. Le procédé permet de détecter une éventuelle incohérence entre les répliques.

Ce procédé de gestion peut encore être amélioré.

Par exemple, lors d'une perte de connexion entre les répliques, une incohérence est susceptible de ne pas être détectée dans certains cas, par exemple lorsque les répliques font partie de systèmes embarqués dans des plateformes différentes, et les liaisons de données entre ces plateformes sont temporairement interrompues.

Par ailleurs, d'autres procédés de gestion connus impliquent la transmission d'une grande quantité d'informations ce qui n'est pas toujours compatible une bande passante donnée pour la transmission de telles données entre les différentes plateformes, car cette bande passante est souvent faible.

Aussi, des procédés connus ne sont pas toujours adaptés pour des contraintes imposées par des systèmes embarqués. Ces contraintes imposent par exemple une robustesse aux temps de latence, avec une latence prédéfinie très faible, en plus d'une robustesse aux pertes de connexion. A titre d'illustration, des systèmes embarqués dans un aéronef comprennent des données qui sont modifiées avec une fréquence très élevée, et la transmission entre les aéronefs doit être compatible avec des mises à jours fréquentes.

Un but de l'invention est ainsi d'obtenir un procédé de gestion d'une base de données partagée par une pluralité de systèmes embarqués qui est particulièrement fiable, en particulier même lors d'une perte de connexion entre des répliques de la base de données, tout en étant simple à mettre en oeuvre.

A cet effet, l'invention a pour objet un procédé de gestion d'une base de données partagée par une pluralité de systèmes embarqués, chaque système embarqué étant implémenté dans une plateforme respective, chaque système embarqué comprenant une réplique de la base de données, et étant relié à chaque autre système embarqué de la pluralité de systèmes embarqués par une liaison de données, chaque réplique comprenant un ensemble d'éléments, chaque élément comprenant une valeur, un numéro de version associé à cette valeur, et un nom de source associé à ce numéro de version, le nom de source indiquant le nom de la plateforme comprenant le système embarqué générant la valeur de l'élément selon ledit numéro de version, le procédé de gestion comprenant des étapes de :
- modification de la valeur d'au moins un élément, dit élément modifié, de l'ensemble d'éléments dans la réplique de la base de données d'un système embarqué de la pluralité de systèmes embarqués, dit système embarqué actif ;
- incrémentation du numéro de version de l'élément modifié dans la réplique du système embarqué actif ;
- changement du nom de source de l'élément modifié dans la réplique du système embarqué actif, au nom de la plateforme comprenant le système embarqué actif ayant incrémenté le numéro de version lors de l'étape d'incrémentation ;
- diffusion, par la liaison de données, d'un premier message comprenant au moins le numéro de version de l'élément modifié, incrémenté lors de l'étape d'incrémentation, et le nom de source de l'élément modifié, changé lors de l'étape de changement.

On conçoit que le procédé de gestion est particulièrement fiable, car le nom de source donne une information complémentaire quant à la version de l'élément modifié transmise par le premier message. Cela permet notamment de détecter une modification multiple d'un élément lorsque les systèmes embarqués de deux plateformes différentes modifient en parallèle cet élément, avant d'émettre respectivement le premier message. En particulier, dans ce cas, même si le numéro de version de l'élément modifié, dans les premiers messages respectifs, est identique, le nom de source de l'élément modifié est différent dans ces premiers messages, ce qui permet alors de détecter la modification parallèle d'un même élément.

Le procédé de gestion permet d'obtenir une intégrité élevée de l'ensemble des répliques même dans le cas d'une interruption de la liaison de données impliquant la perte du premier message, puisqu'une modification d'un élément est également détecté dans ce cas, lors du rétablissement de liaison de données.

Aussi, le procédé de gestion est particulièrement simple à mettre en oeuvre, car il suffit d'incrémenter le numéro de version et changer le nom de source comme suite à une modification de la valeur de l'élément modifié pour garantir une détection de cette modification par chaque système embarqué.

Enfin, une telle détection requiert peu de ressources de calcul.

Suivant d'autres aspects avantageux de l'invention, le procédé de gestion comprend une ou plusieurs des caractéristiques suivantes, prise(s) isolément ou suivant toutes les combinaisons techniquement possibles :
- chaque plateforme est un aéronef respectif, la liaison de données étant une liaison sans fil ;
- lors de l'étape de modification, la valeur de l'élément modifié est modifiée en fonction d'au moins une donnée courante provenant d'au moins un capteur de la plateforme comprenant le système embarqué actif ;
- le premier message comprend en outre un numéro de version antérieure dudit élément modifié et un nom de source antérieure, le numéro de version antérieure étant le numéro de version de l'élément modifié avant la mise en oeuvre de l'étape d'incrémentation, le nom de source antérieure étant le nom de source de l'élément modifié avant la mise en oeuvre de l'étape de changement,
   le premier message consistant de préférence, pour l'élément modifié, du numéro de version, du nom de source, du numéro de version antérieure et du nom de source antérieure lorsque l'élément modifié est du type élément partagé, modifiable par plusieurs systèmes embarqués de la pluralité de systèmes embarqués ;
- le procédé de gestion comprend en outre une étape de réception d'un second message par le système embarqué actif, émis d'un système embarqué autre que le système embarqué actif, dit système embarqué tiers, le second message comprenant le numéro de version de l'élément modifié comme suite à une incrémentation du numéro de version par le système embarqué tiers, et un numéro de version antérieure correspondant au numéro de version avant cette incrémentation, le second message comprenant en outre le nom de source de l'élément modifié comme suite à un changement du nom de source par le système embarqué tiers, et un nom de source antérieure correspondant au nom de source avant ce changement,
   le procédé de gestion comprenant en outre une étape de mise à jour, lors de laquelle le système embarqué actif met à jour sa réplique en fonction du second message ;
- chaque élément de la base de données est d'un type choisi parmi un élément propriétaire et un élément partagé, l'élément propriétaire étant modifiable uniquement par l'un des systèmes embarqués, l'élément partagé étant modifiable par plusieurs systèmes embarqués de la pluralité de systèmes embarqués ;
- lors de l'étape de mise à jour et lorsque l'élément modifié est un élément partagé, le système embarqué actif remplace le numéro de version et le nom de source dans sa réplique par le numéro de version et le nom de source compris dans le second message lorsqu'à la fois :
   - le numéro de version antérieure compris dans le second message est identique au numéro de version dans la réplique du système embarqué actif, et
   - le nom de source antérieure compris dans le second message est identique au nom de source dans la réplique du système embarqué actif,
   sinon le système embarqué actif marquant l'élément modifié comme invalide dans sa réplique ;
- lorsque l'élément modifié est un élément propriétaire, et modifiable uniquement par le système embarqué tiers, le système embarqué actif modifie l'élément modifié dans sa réplique en fonction du second message, le second message comprenant en outre la valeur dudit élément modifié ;
- le procédé de gestion comprend en outre une phase de resynchronisation point-à-point, comprenant :
   - une étape d'émission d'un message de resynchronisation point-à-point à un système embarqué autre que le système embarqué actif, comprenant le numéro de version et le nom de source d'au moins certains éléments dans la réplique du système embarqué actif ;
   - une étape de réception d'un message de réponse comprenant le numéro de version et le nom de source, et de préférence en outre la valeur, de chaque élément dont le numéro de version ou le nom de source compris dans le message de resynchronisation point-à-point diffère de celui dans la réplique dudit système embarqué autre que le système embarqué actif ;
   - une étape de correction, lors de laquelle le système embarqué actif corrige sa réplique en fonction du message de réponse ;
- le procédé de gestion comprend une étape de détection de perte de connexion de la liaison de données par le système embarqué actif, la phase de resynchronisation point-à-point étant déclenchée lors d'une reconnexion comme suite à la détection de perte de connexion de la liaison de données ;
- le procédé de gestion comprend en outre une phase de resynchronisation globale, comprenant :
   - une étape d'émission, à chaque système embarqué de la pluralité de systèmes embarqués autre que le système embarqué actif, d'un message de resynchronisation spécifique au système embarqué respectif, comprenant le numéro de version et le nom de source d'au moins certains éléments dans la réplique du système embarqué actif ;
   - une étape de réception, en provenance de chaque système embarqué autre que le système embarqué actif, d'un message de réponse spécifique à ce système embarqué, comprenant le numéro de version et le nom de source, et de préférence en outre la valeur, de chaque élément dont le numéro de version ou le nom de source compris dans le message de resynchronisation spécifique au système embarqué diffère de celui dans la réplique dudit système embarqué ;
   - une étape de correction, lors de laquelle le système embarqué actif corrige sa réplique en fonction de chaque message de réponse spécifique.

L'invention a également pour objet un produit programme d'ordinateur comportant des instructions logicielles qui, lorsque mises en oeuvre par un équipement informatique, mettent en oeuvre le procédé de gestion tel que décrit ci-dessus.

L'invention a également pour objet un système embarqué de gestion d'une base de données partagée par une pluralité de systèmes embarqués, le système embarqué étant implémenté dans une plateforme, comprenant une réplique de la base de données, et étant relié à chaque autre système embarqué de la pluralité de systèmes embarqués par une liaison de données, la réplique comprenant un ensemble d'éléments, chaque élément comprenant une valeur, un numéro de version associé à cette valeur, et un nom de source associé à ce numéro de version, le nom de source indiquant le nom de la plateforme comprenant le système embarqué générant la valeur de l'élément selon ledit numéro de version,
le système embarqué comprenant un module de traitement configuré pour modifier la valeur d'au moins un élément, dit élément modifié, de l'ensemble d'éléments dans la réplique de la base de données du système embarqué, pour incrémenter le numéro de version de l'élément modifié dans la réplique du système embarqué, et pour changer le nom de source de l'élément modifié dans la réplique, au nom de la plateforme comprenant le système embarqué ayant incrémenté le numéro de version,
le système embarqué comprenant en outre un dispositif d'émission/réception configuré pour diffuser, par la liaison de données, un premier message comprenant au moins le numéro de version de l'élément modifié, incrémenté par le module de traitement, et le nom de source de l'élément modifié, changé par le module de traitement.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un ensemble comprenant plusieurs plateformes comprenant chacune un système embarqué selon l'invention ;
- [Fig 2] la figure 2 est un organigramme d'un procédé de gestion mis en oeuvre par un système embarqué selon la figure 1 ;
- [Fig 3] la figure 3 est une vue schématique illustrant un exemple d'implémentation du procédé de gestion de la figure 2 ;
- [Fig 4] la figure 4 est un organigramme d'une phase de resynchronisation point-à-point du procédé de gestion de la figure 2, et
- [Fig 5] la figure 5 est un organigramme d'une phase de resynchronisation globale du procédé de gestion de la figure 2.

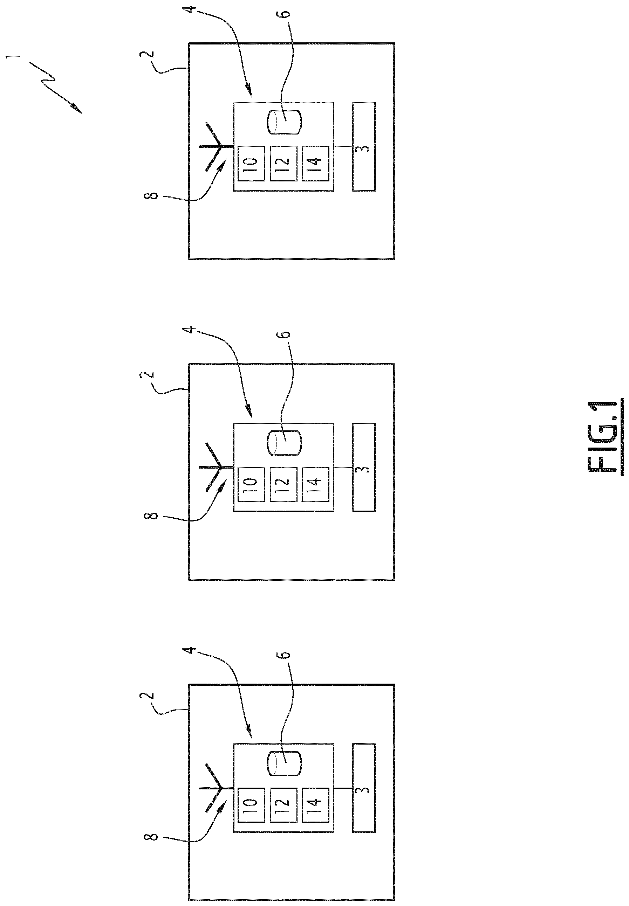

En référence à la figure 1, un ensemble 1 comprend plusieurs plateformes 2, de préférence au moins trois plateformes 2, comprenant chacune au moins un capteur 3 et un système embarqué 4.

Chaque plateforme 2 est de préférence un aéronef, tel qu'un avion ou un ballon dirigeable par exemple.

En variante, chaque plateforme 2 est un satellite, un navire, un sous-marin, un véhicule terrestre tel qu'un véhicule routier ou ferroviaire.

En variante encore, chaque plateforme 2 comprend plusieurs systèmes embarqués 4.

Chaque capteur 3 est un capteur configuré pour mesurer une donnée relative à la situation de la plateforme 2, de son environnement ou relative à d'autres plateformes. Par exemple, chaque capteur 3 est un capteur choisi de la liste suivante : un capteur de localisation, un capteur de pression, un capteur de température, un capteur d'images, un capteur audio, un capteur de données satellitaires, un capteur de plateformes environnantes, tel qu'un capteur d'un système d'alerte de trafic et d'évitement de collision TCAS (de l'anglais « Traffic alert and Collision Avoidance System ») et un capteur météorologique, tel qu'un capteur comprenant un radar météo.

Chaque système embarqué 4 se présente au moins partiellement sous la forme d'un calculateur indépendant ou est par exemple intégrée dans un système de gestion de vol (ou FMS de l'anglais « Flight Management System ») de l'aéronef 2, dans un sac de vol électronique (ou EFB de l'anglais « Electronic Flight Bag »), dans un calculateur d'aide à la navigation embarqué et/ou dans tout autre système embarqué existant.

Chaque système embarqué 4 comprend une réplique 6 d'une base de données, un dispositif d'émission/réception 8, un module d'acquisition 10, un module de traitement 12 et un module de sortie 14.

La base de données est partagée par les systèmes embarqués 4, sous la forme des répliques 6.

Comme visible dans l'exemple de la figure 1, la base de données est dépourvue de base de données centralisée. En particulier, les répliques 6 de la base de données présentent un niveau hiérarchique égal l'une par rapport à l'autre. Par « niveau hiérarchique égal », il est entendu que des informations d'une réplique 6 quelconque ne prévalent pas aux informations des autres répliques 6.

De préférence, chaque réplique 6 est configurée pour être verrouillée par le système embarqué 4 dans lequel elle est intégrée, lors d'un traitement de données. Lorsqu'une réplique 6 est verrouillée, elle est inapte à échanger des données avec les systèmes embarqués 4 autres que le système embarqué 4 dans laquelle elle est intégrée.

Chaque dispositif d'émission/réception 8 est configuré pour mettre en oeuvre une liaison de données avec chaque autre système embarqué 4 de la pluralité de systèmes embarqués pour échanger des messages.

La liaison de données est de préférence une liaison sans fil.

Selon une variante non représentée, la liaison de données est une liaison câblée.

Le module d'acquisition 10, le module de traitement 12 et le module de sortie 14 de chaque système embarqué 4 se présente au moins partiellement sous la forme d'un logiciel exécutable par un processeur et stocké dans une mémoire du calculateur correspondant. Le processeur est par exemple un microprocesseur, notamment du type PowerPC, ou du type ARM.

En variante ou en complément, chacun des modules 10, 12, 14 se présente au moins partiellement sous la forme d'un dispositif physique, tel que par exemple un circuit logique programmable, tel qu'un FPGA (de l'anglais « Field Programmable Gate Array »), ou encore sous la forme d'un circuit intégré dédié, tel qu'un ASIC (de l'anglais « Application Specific Integrated Circuit »).

Les systèmes embarqués 4 sont notamment configurées pour être exécutées parallèlement, par exemple de manière simultanée. Par exemple, chaque système embarqué 4 est configuré pour effectuer des traitements, notamment par les modules 10, 12 et 14, et accéder à sa réplique 6 indépendamment des autres systèmes embarqués 4.

Chaque réplique 6 comprend une pluralité d'éléments. En particulier, chaque réplique 6 comprend le même nombre et les mêmes types d'éléments.

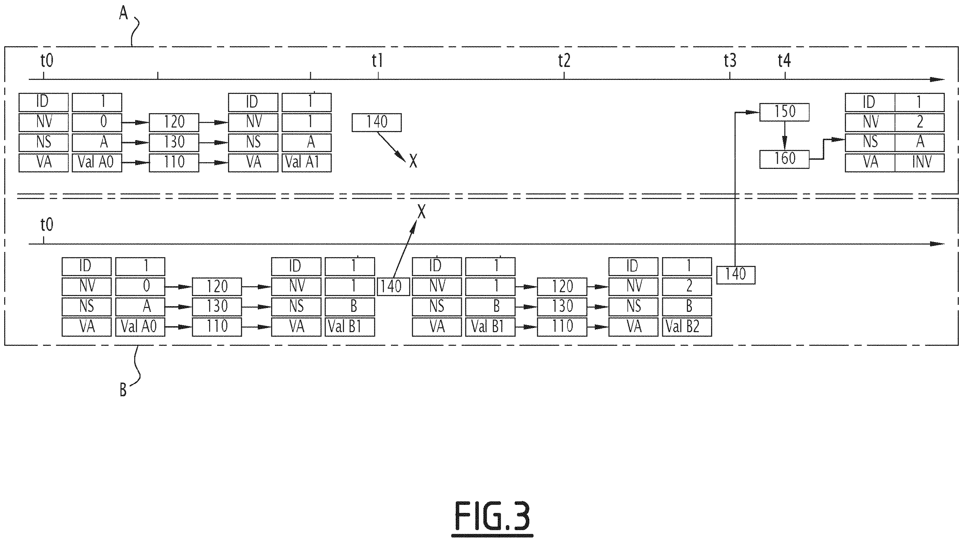

Comme illustré selon un exemple sur la figure 3, chaque élément comprend une valeur VA et un numéro de version NV associé à cette valeur VA.

La valeur VA est par exemple une fonction, dépendant de préférence d'au moins une donnée courante provenant du capteur 3 ou de l'un de la pluralité de capteurs 3 de la plateforme 2.

Chaque élément comprend en outre un nom de source NS associé au numéro de version NV.

Le nom de source NS indique le nom de la plateforme 2 comprenant le système embarqué 4 ayant généré la valeur VA de l'élément selon le numéro de version NV auquel le nom de source NS est associé.

A titre d'illustration, en référence à la figure 3, à l'instant t0, la valeur VA de l'élément est « Val A0 » présente le numéro de version NV « 0 » et est générée par la plateforme appelée A dans cet exemple. Le nom de source NS est ainsi « A ».

De préférence, chaque élément comprend en outre un identifiant ID et/ou une information relative au type de l'élément, non représentée sur la figure 3.

Chaque élément de la base de données est par exemple soit un élément de type dit élément propriétaire, soit un élément de type dit élément partagé.

L'élément propriétaire est modifiable uniquement par l'un des systèmes embarqués 4, en particulier sa valeur VA est modifiable uniquement par ce système embarqué 4.

Par « modifiable », il est entendu dans la présente description la génération, la modification et/ou la suppression de l'élément dans la réplique 6 du système embarqué 4 concerné.

L'un des systèmes embarqués 4 est alors spécifiquement autorisé à modifier l'élément propriétaire correspondant, par exemple en fonction d'une donnée courante provenant du capteur 3 de la plateforme 2 comprenant ce système embarqué 4.

Les autres systèmes embarqués 4 sont de préférence uniquement autorisés à mettre à jour la valeur VA de l'élément propriétaire en fonction d'une information provenant du système embarqué 4 spécifiquement autorisé.

L'élément partagé est modifiable par plusieurs parmi les systèmes embarqués 4, en particulier sa valeur VA est modifiable par plusieurs systèmes embarqués 4.

En particulier, la valeur VA de l'élément partagé est susceptible d'être recalculée par chaque système embarqué 4 qui est autorisé à modifier l'élément partagé, de préférence par tous les systèmes embarqués 4 de l'ensemble 1.

Le fait de mémoriser les éléments partagés dans les répliques 6 permet de réduire la consommation de ressources de calcul des systèmes embarqués 4. Bien que plusieurs, voire tous les systèmes embarqués 4 soient aptes à recalculer les éléments partagés, le fait de mémoriser ces éléments dans les répliques 6 permet d'utiliser les valeurs VA des éléments partagés directement au lieu de les calculer, puisqu'un tel calcul est complexe.

Par exemple, la valeur VA de chaque élément partagé comprend plusieurs fractions formant ensemble la valeur VA. Chaque fraction est de préférence la valeur VA d'un élément propriétaire. De ce fait, la valeur VA de chaque élément partagé est de préférence ré-calculable intégralement à partir des éléments propriétaires dans la réplique 6 d'un système embarqué respectif 4.

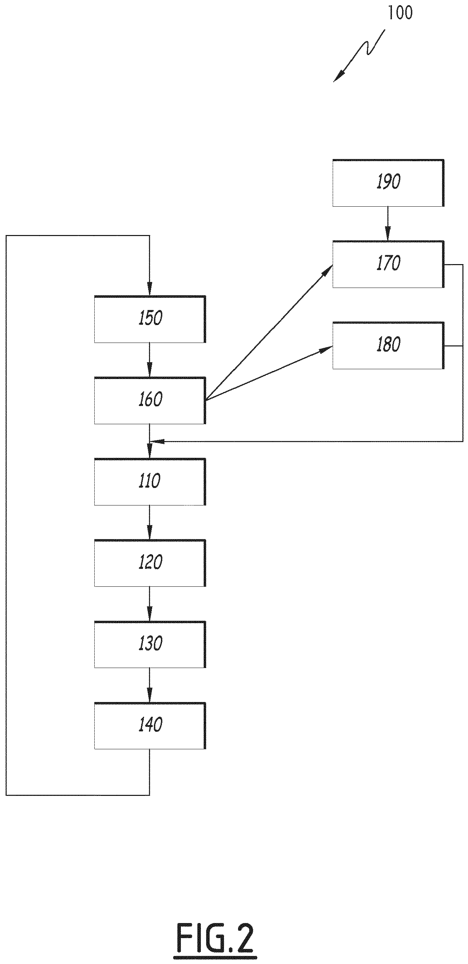

Un procédé de gestion 100 de la base de données est maintenant décrit en référence à la figure 2.

Le procédé de gestion 100 est au moins partiellement, de préférence intégralement, mis en oeuvre par l'un des systèmes embarqués 4, appelé système embarqué actif dans présente description.

Le procédé de gestion 100 comprend une étape de modification 110, une étape d'incrémentation 120, une étape de changement 130, une étape de diffusion 140, une étape de réception 150, une étape de mise à jour 160, une phase de resynchronisation point-à-point 170 et une phase de resynchronisation globale 180.

Le procédé de gestion 100 est de préférence mis en oeuvre par cycles de fonctionnement.

De préférence, le fonctionnement, notamment le traitement de données, par un système embarqué 4 n'est pas synchronisé avec les autres systèmes embarqués 4. Par exemple, chaque système embarqué 4 met en oeuvre l'étape de modification 110 à un instant différent l'un par rapport à l'autre.

De préférence, chaque système embarqué 4 met en oeuvre son propre cycle de fonctionnement. En particulier, la durée d'un cycle de fonctionnement d'un système embarqué 4 est indépendante, et par exemple différente, de la durée des cycles de fonctionnement des autres systèmes embarqués.

Comme illustré sur la figure 2, un cycle de fonctionnement débute par l'étape 150, suivi par les étapes 160, éventuellement 170 et/ou 180, 110, 120, 130 et 140.

Les étapes 150 et 160, et éventuellement 170 et/ou 180, forment une phase de synchronisation permettant de synchroniser les répliques 6 entre elles, notamment avant une phase de traitement du système embarqué actif, formée par les étapes 110 à 130. Cette phase de traitement est optionnelle.

Au début de la mise en oeuvre de l'étape de modification 110, les répliques 6 sont en particulier identiques. Lorsque chaque réplique 6 est identique l'une à l'autre, chaque réplique 6 comprend, pour un élément donné, la même valeur VA, le même numéro de version NV et le même nom de source NS.

En variante, les répliques 6 sont différentes l'une par rapport à l'autre au début de la mise en oeuvre de l'étape de modification 110.

Lors de l'étape de modification 110, le système embarqué actif modifie la valeur VA de l'un des éléments dans sa réplique 6 de la base de données. Cet élément est appelé « élément modifié » dans la présente description.

Selon un exemple, le système embarqué actif modifie les valeurs VA de plusieurs éléments de sa réplique 6. Dans ce cas, les caractéristiques de la présente description concernant l'élément modifié s'appliquent pour chacun des éléments modifiés par le système embarqué actif.

Dans la suite de la description, le procédé de gestion 100 est décrit pour un seul élément modifié.

De préférence, le système embarqué actif modifie la valeur VA de l'élément modifié en fonction d'une donnée courante provenant du capteur 3 de la plateforme 2 comprenant le système embarqué actif.

Par exemple, lorsque le capteur 3 relié au système embarqué actif génère une nouvelle mesure, le système embarqué actif modifie la valeur VA en fonction de la nouvelle mesure.

Dans ce cas, l'élément modifié est en particulier du type élément propriétaire.

Lorsque l'élément modifié est du type élément partagé, le système embarqué actif modifie la valeur VA en fonction d'une fonction prédéterminée dépendant d'une pluralité de valeurs VA d'éléments propriétaires selon sa réplique 6.

Lors de l'étape d'incrémentation 120, le système embarqué actif incrémente le numéro de version NV de l'élément modifié dans sa réplique 6.

Lors de l'étape de changement 130, le système embarqué actif change le nom de source NS de l'élément modifié dans sa réplique 6 au nom de la plateforme 2 comprenant le système embarqué actif ayant incrémenté le numéro de version NV lors de l'étape d'incrémentation 120. En d'autres termes, par exemple, l'étape de changement 130 comprend le changement du nom de source NS de l'élément modifié dans la réplique 6 du système embarqué actif, vers le nom de la plateforme 2 comprenant le système embarqué actif ayant incrémenté le numéro de version NV lors de l'étape d'incrémentation 120. En particulier, l'étape de changement 130 comprend le remplacement, ou consiste du remplacement, d'une valeur précédente du nom de source NS par le nom de la plateforme 2 comprenant le système embarqué actif ayant incrémenté le numéro de version NS lors de l'étape d'incrémentation 130. Ainsi, de préférence, lors de l'étape de changement 130, le nom de source NS est changé, et après le changement mis en oeuvre lors de l'étape de changement 130, le nom de source NS, et en particulier une valeur du nom de source NS, est égal au nom de la plateforme 2 comprenant le système embarqué actif ayant incrémenté le numéro de version NV lors de l'étape d'incrémentation 120.Lors de l'étape de diffusion 140, le système embarqué actif diffuse, par la liaison de données, un premier message, de préférence à tous les autres systèmes embarqués 4.

En particulier, le système embarqué actif émet le premier message par son dispositif d'émission/réception 8. Chaque système des autres systèmes embarqués 4 qui est dans un périmètre géographique prédéterminé par rapport au dispositif d'émission/réception 8 du système embarqué actif, reçoit le premier message.

Selon un exemple, comme suite à l'étape de diffusion 140, au moins un système embarqué 4 autre que le système embarqué actif met à jour sa réplique 6 en fonction du premier message.

Le premier message comprend une pluralité de composants, dont au moins le numéro de version NV de l'élément modifié, incrémenté lors de l'étape d'incrémentation 120, et le nom de source NS de l'élément modifié, changé lors de l'étape de changement 130.

Le premier message comprend de préférence en outre des composants suivants : un numéro de version antérieure dudit élément modifié et un nom de source antérieure.

Le numéro de version antérieure est le numéro de version NV de l'élément modifié avant la mise en oeuvre de l'étape d'incrémentation 120.

Le nom de source antérieure est le nom de source NS de l'élément modifié avant la mise en oeuvre de l'étape de changement 130.

De préférence, le premier message consiste des quatre composants précités, à savoir le numéro de version NV de l'élément modifié, le nom de source NS de l'élément modifié, le numéro de version antérieure et le nom de source antérieure. Le premier message consiste en particulier de ces quatre composants lorsque l'élément modifié est du type élément partagé.

De préférence, le premier message ne comprend alors pas la valeur VA de l'élément modifié, en particulier lorsque l'élément modifié est du type élément partagé.

Cela permet de réduire la quantité de données transmise entre les systèmes embarqués 4.

Selon un exemple, lorsque l'élément modifié est du type élément propriétaire, le premier message comprend en outre la valeur VA de l'élément modifié.

Lorsque le système embarqué actif modifie les valeurs VA de plusieurs éléments dans sa réplique 6 lors de l'étape de modification 110, le premier message comprend par exemple uniquement les quatre composants précités pour chaque élément modifié, mais de préférence non pas pour les autres éléments non modifiés.

Cela permet également de réduire la quantité de données entre les systèmes embarqués 4.

Selon un exemple, comme suite à l'étape de diffusion 140, chaque système embarqué 4 autre que le système embarqué actif met à jour sa réplique 6 en fonction du premier message.

Un exemple des étapes de réception 150 et de mise à jour 160 est maintenant décrit. Ces étapes sont mises en oeuvre par le système embarqué actif.

De préférence, les étapes 150 et 160 sont mises en oeuvre avant la mise en oeuvre des étapes 110 à 140 par le système embarqué actif, et comme suite à une mise en oeuvre des étapes de modification 110, d'incrémentation 120 et de changement 130 par un système embarqué 4 autre que le système embarqué actif.

Cet autre système embarqué 4 est appelé système embarqué tiers.

Lors de l'étape de réception 150, le système embarqué actif reçoit un second message du système embarqué tiers.

Le second message comprend les quatre composants de l'élément modifié, comme suite à une modification de l'élément modifié par le système embarqué tiers dans sa réplique 6, à savoir le numéro de version NV de l'élément modifié, le nom de source NS de l'élément modifié, le numéro de version antérieure de l'élément modifié et le nom de source antérieure de l'élément modifié.

Lorsque l'élément modifié est du type élément propriétaire, le second message comprend de préférence en outre la valeur VA de l'élément modifié.

Les composants du second message sont en particulier obtenus par mise en oeuvre des étapes de modification 110, d'incrémentation 120 de changement 130 et de diffusion 140 par le système embarqué tiers au lieu du système embarqué actif.

Lors de l'étape de mise à jour 160, le système embarqué actif met à jour sa réplique 6 en fonction du second message.

L'étape de mise à jour 160 comprend au moins une action dépendant du type de l'élément modifié.

L'action est de préférence uniquement mise en oeuvre lorsque le numéro de version NV et/ou le nom de source NS dans le second message diffère du numéro de version NV respectivement le nom de source NS dans la réplique 6 du système embarqué actif.

Lorsque l'élément modifié est un élément propriétaire, l'action est choisie parmi les deux cas suivants.

Selon un premier cas, l'élément propriétaire est modifiable uniquement par le système embarqué actif. Dans ce cas, une différence entre la réplique 6 du système embarqué actif et le second message indique une erreur des systèmes embarqués 4. L'action est par exemple une alerte et/ou un arrêt de fonctionnement des systèmes 4.

Selon un second cas, l'élément propriétaire est modifiable uniquement par le système embarqué tiers, ayant émis le second message. Dans ce cas, le système embarqué actif remplace le numéro de version NV et le nom de source NS dans sa réplique 6 par ceux compris dans le second message.

Selon le second cas, le système embarqué actif déclenche de préférence en outre la phase de resynchronisation point-à-point 170 ou la phase de resynchronisation globale 180, notamment pour obtenir la ou les valeurs VA des éléments propriétaires modifiables uniquement par l'un des systèmes embarqués tiers, et afin d'obtenir la valeur VA de l'élément modifié une fois corrigé sa réplique 6 avec les valeurs VA de ces éléments propriétaires.

Le second cas correspond à une perte de connexion de la liaison de données entre le système embarqué tiers et système embarqué actif, et il est donc avantageux de synchroniser la réplique 6 du système embarqué actif pour prendre en compte des éventuelles modifications.

Lorsque l'élément modifié est un élément partagé, l'action est choisie parmi les deux cas suivants.

Selon un premier cas, le système embarqué actif remplace le numéro de version NV et le nom de source NS dans sa réplique 6 lorsqu'à la fois le numéro de version antérieure compris dans le second message est identique au numéro de version NV dans sa réplique 6, et le nom de source antérieure compris dans le second message est identique au nom de source NS dans sa réplique 6.

Selon le premier cas, le système embarqué actif calcule en outre de préférence la valeur VA de l'élément modifié lors de l'étape de mise à jour 160, éventuellement après mise en oeuvre de la phase 170 ou 180.

Selon un second cas, le numéro de version antérieure compris dans le second message diffère du numéro de version dans la réplique 6 et/ou le nom de source antérieure compris dans le second message diffère du nom de source dans la réplique 6. Dans ce cas, le système embarqué actif marque l'élément modifié comme invalide dans sa réplique 6.

Selon chacun des cas, le système embarqué actif déclenche de préférence la phase 170 ou 180.

Selon un exemple, le procédé comprend en outre une étape de détection de perte de connexion 190 de la liaison de données par le système embarqué actif. Le système embarqué actif déclenche alors la phase de resynchronisation point-à-point 170 lors d'une reconnexion comme suite à la détection de perte de connexion de la liaison de données.

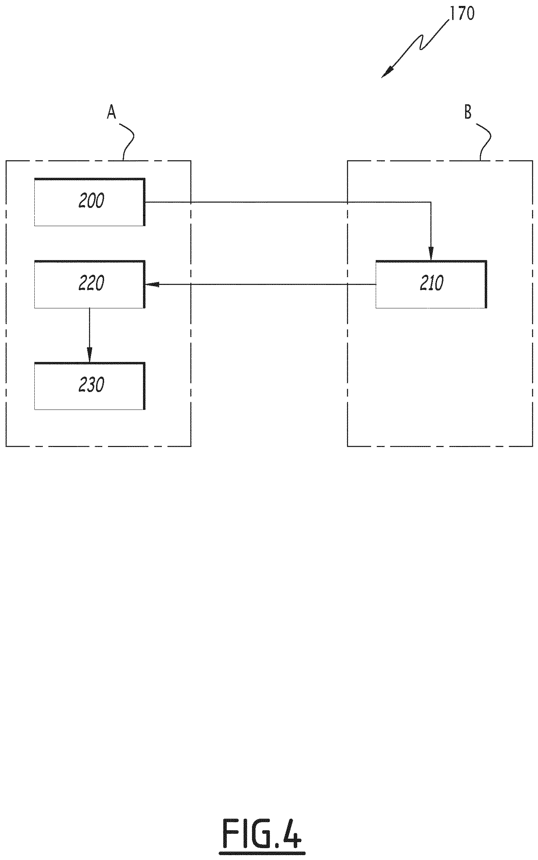

La phase de resynchronisation point-à-point 170 est décrite en référence à la figure 4.

La phase de resynchronisation point-à-point 170 comprend une étape d'émission 200, une étape de traitement 210, une étape de réception 220 et une étape de correction 230.

Selon un exemple, le système embarqué actif est intégré dans une première plateforme parmi les plateformes 2, et le système embarqué tiers est intégré dans une seconde plateforme parmi les plateformes 2.

Dans la suite de la description, le système embarqué actif est appelé « système A » et le système embarqué tiers est appelé « système B ».

Lors de l'étape d'émission 200, le système A émet un message de resynchronisation point-à-point, appelé message point-à-point dans la suite, au système B.

Le message point-à-point comprend le numéro de version NV et le nom de source NS d'au moins certains éléments dans la réplique 6 du système A.

En particulier, le message point-à-point comprend le numéro de version NV et le nom de source NS de l'ensemble des éléments partagés et des éléments propriétaires qui sont uniquement modifiables par le système B.

Lors de l'étape de traitement 210, le système B compare le numéro de version NV et le nom de source NS de chaque élément compris dans le message point-à-point avec ceux dans sa réplique 6.

Le système B génère un message de réponse comprenant le numéro de version NV et le nom de source NS de chaque élément dont le numéro de version NV ou le nom de source NS compris dans le message point-à-point diffère de celui dans sa réplique 6.

En complément, pour chaque élément propriétaire modifiable uniquement par le système B, le message de réponse comprend en outre la valeur VA de cet élément.

Lors de l'étape de réception 220, le système A reçoit le message de réponse.

Lors de l'étape de correction 230, le système A corrige sa réplique 6 en fonction du message de réponse.

Par exemple, pour chaque élément partagé, le système A recalcule sa valeur VA en prenant en compte les éléments propriétaires reçus par le message de réponse.

De préférence, pour chaque élément partagé, le système A met à jour ensuite le numéro de version NV de cet élément dans sa réplique 6, en incrémentant un numéro de version maximal de l'élément par la valeur 1. Le numéro de version maximal est le maximum entre le numéro de version NV reçu par le message de réponse et le numéro de version NV dans la réplique 6 du système A.

Pour chaque élément propriétaire, modifiable uniquement par le système B, le système A remplace la valeur VA de cet élément dans sa réplique 6 par la valeur VA compris dans le message de réponse.

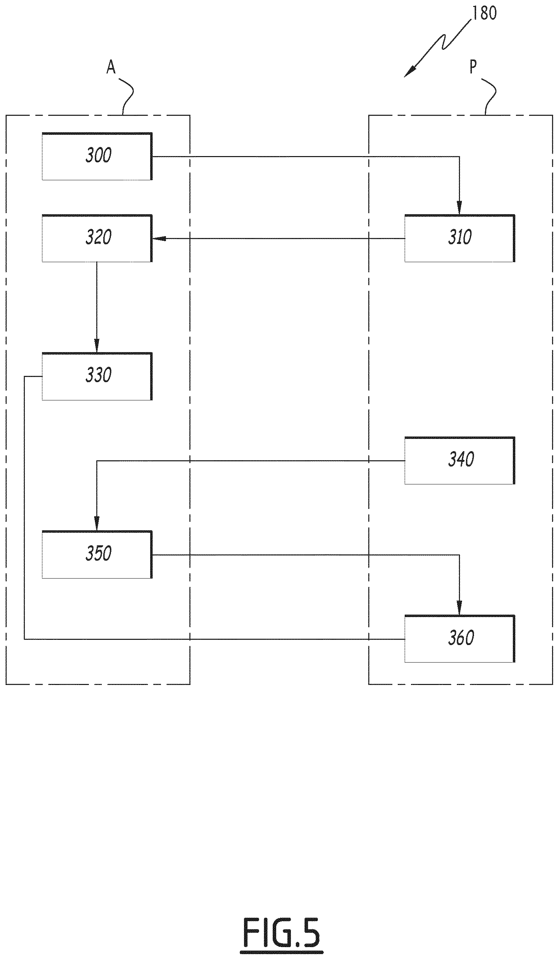

La phase de resynchronisation globale 180 est décrite en référence à la figure 5.

La phase de resynchronisation globale 180 comprend une étape d'émission 300, une étape de traitement 310, une étape de réception 320, une étape de correction 330, une première étape additionnelle 340, une seconde étape additionnelle 350 et une troisième étape additionnelle 360.

A l'exception des différences décrites ci-après, l'étape d'émission 300 est identique à l'étape d'émission 200, l'étape de traitement 310 est identique à l'étape de traitement 210, l'étape de réception 320 est identique à l'étape de réception 220, et l'étape de correction 330 est identique à l'étape de correction 230.

Lors de l'étape d'émission 300, le système A émet, à chaque système embarqué 4 de la pluralité de systèmes embarqués 4 autre que le système A, un message de resynchronisation spécifique au système embarqué 4 respectif.

Par « chaque système embarqué 4 de la pluralité de systèmes embarqués 4 autre que le système A » sont entendus tous les systèmes embarqués 4 de l'ensemble 1, dont un système est représenté sur la figure 5 et désigné par P, à l'exception du système A.

Le message de resynchronisation spécifique au système P comprend en particulier le numéro de version NV et le nom de source NS de l'ensemble des éléments partagés et des éléments propriétaires qui sont uniquement modifiables par le système P.

Lors de l'étape de réception 320, le système A reçoit, en provenance de chaque système P, un message de réponse spécifique à ce système P, comprenant le numéro de version NV et le nom de source NS, et optionnellement la valeur VA, de chaque élément dont le numéro de version NV ou le nom de source NS compris dans le message de resynchronisation spécifique au système P diffère de celui dans la réplique 6 du système P respectif.

Lors de l'étape 340, chaque système P transmet une requête au système A comprenant le numéro de version NV et le nom de source NS de chaque élément propriétaire qui est modifiable uniquement par le système A, pour obtenir une mise à jour de ces éléments.

Lors de l'étape 350, le système A reçoit la requête de chaque système P, et transmet, au système concerné P, la valeur VA, le numéro de version NV et le nom de source NS selon sa réplique 6, lorsque le numéro de version NV ou le nom de source NS de la requête diffère de celui dans sa réplique 6.

Lors de l'étape 360, chaque système P remplace chaque élément reçu lors de l'étape 350 dans sa réplique 6.

En complément, lors de l'étape 360, chaque système P met à jour les éléments partagés de sa réplique 6 en fonction du numéro de version NV ou le nom de source NS déterminé pour l'élément correspondant lors de l'étape de correction 330.

Selon un exemple, au moins un, de préférence chacun, des messages suivants est transmis via la liaison de données avec une donnée CRC (de l'anglais « cyclic redundancy check » pour contrôle de redondance cyclique) pour s'assurer de l'intégrité du message transmis via la liaison de données : le premier message, le second message, le message point-à-point, le message de réponse, le message de resynchronisation spécifique, le message de réponse spécifique.

Un exemple d'implémentation du procédé de gestion 100 est décrit en référence à la figure 3.

Lors de l'instant t0, les répliques 6 des systèmes A et B sont identiques.

Lors de l'étape de modification 110, le système A modifie la valeur, de l'élément ayant l'identifiant « 1 », de « Val A0 » à « Val A1 ». Cet élément est en particulier du type élément partagé.

Lors de l'étape d'incrémentation 120, le système A incrémente le numéro de version de « 0 » à « 1 ».

Lors de l'étape de changement 130, le système A garde le nom de source à « A » dans sa réplique 6, car c'est le système A qui a modifié l'élément « 1 ».

Sur la figure 3, les étapes 110 à 130 sont mises en oeuvre simultanément. En variante non représentée sur la figure 3, elles sont mises en oeuvre de manière consécutive.

A l'instant t1, le système A met en oeuvre l'étape de diffusion 140, en diffusant le premier message comprenant les composants suivants de l'élément « 1 » : le numéro de version antérieure « 0 », le nom de source antérieure « A », le numéro de version « 1 » et le nom de source « A ».

Selon l'exemple, la liaison de données est interrompue temporairement, et le premier message ne parvient pas aux autres plateformes 2, comme cela est illustré par un croix sur la figure 3.

L'exemple comprend en outre la mise en oeuvre des étapes 110 à 140 par le système B, également pour l'élément « 1 ». Ces étapes sont de préférence mises en oeuvre simultanément à la mise en oeuvre de ces étapes par le système A.

Le système B modifie, dans sa réplique 6, la valeur de l'élément « 1 » de « Val A0 » à « Val B1 », incrémente le numéro de version de « 0 » à « 1 », et change le nom de source de « A » à « B ».

A l'instant t1, le système B met en oeuvre l'étape de diffusion 140, en diffusant le second message comprenant, pour l'élément « 1 », le numéro de version antérieure « 0 », le nom de source antérieure « A », le numéro de version « 1 » et le nom de source « B ».

Dans la mesure où la liaison de données est interrompue temporairement, le second message ne parvient pas aux autres plateformes 2, comme cela est illustré par un croix sur la figure 3.

Les répliques 6 des systèmes A et B comprennent des valeurs VA différentes pour l'élément « 1 » à l'instant t1. Le numéro de version NV est dans les deux répliques 6 égal à « 1 », et ne permet ainsi pas de détecter que le l'élément « 1 » comprend des valeurs VA différentes. Toutefois, le nom de source NS est différent à l'instant t1, permettant ainsi la détection d'une différence des valeurs VA.

L'exemple comprend, lors de l'instant t2, une mise en oeuvre additionnelle des étapes 110, 120 et 130 par le système B.

Le système B modifie la valeur de « Val B1 » en « Val B2 », incrémente le numéro de version de « 1 » à « 2 » et garde le nom de source à « B ».

Lors de l'instant t3, le système B diffuse le second message comprenant l'élément « 1 » tel que modifié lors de l'instant t2.

Lors de l'instant t4, le système A reçoit le second message, et met à jour sa réplique 6 en fonction du second message.

Le second message comprend, pour l'élément « 1 », le numéro de version antérieure « 1 », le nom de source antérieure « B », le numéro de version « 2 » et le nom de source « B ».

Le système A détecte un conflit lors de l'étape de mise à jour 160, car même si le numéro de version antérieure est égal au numéro de version NV dans sa réplique 6, le nom de source antérieure compris dans le second message diffère au nom de source NS dans sa réplique 6.

Le système A marque alors la valeur de l'élément « 1 » dans sa réplique 6 comme invalide, illustré par « INV » sur la figure 3.

Pour mettre à jour sa réplique notamment avec les élément propriétaires modifiables par le système B et d'autres systèmes embarqués tiers, le système A déclenche la phase 170 ou 180. Chacune de ces phases 170, 180 permet en particulier de calculer l'élément « 1 », par exemple par mise en oeuvre de l'étape de correction 230 lors de la phase 170 ou de l'étape de correction 330 lors de la phase 180.

On conçoit que le procédé de gestion 100 présente un grand nombre d'avantages.

En particulier, chaque réplique 6 est apte à fonctionner de manière totalement autonome, puisque l'implémentation des étapes 110 à 140 n'implique pas d'interaction avec les autres répliques 6.

Aussi, grâce à la combinaison du numéro de version NV avec le nom de source NS, la modification de l'élément modifiée est détectable par chaque système embarqué 4, même dans le cas d'une perte du premier ou second message lors d'une interruption de la liaison de données.

La distinction de types d'éléments entre les éléments propriétaires et les éléments partagés permet à chaque système embarqué 4 de mettre à jour sa réplique 6 en mettant en oeuvre une action adaptée au type d'élément qui est modifié et dont la modification est reçue par le second message.

La transmission des messages ensemble avec la donnée CRC permet d'augmenter la fiabilité, car on est assuré que chaque message transmis par la liaison de données est transmis de manière intègre.

La phase 170 permet d'obtenir une mise à jour de la réplique 6 du système embarqué actif par rapport au système embarqué tiers, par exemple après une interruption temporaire de la liaison de données du système embarqué actif.

La phase 180 permet d'obtenir une mise à jour de toutes les répliques 6, par exemple après une interruption des liaisons de données pendant une longue durée.

## Revendications

1. Procédé de gestion (100) d'une base de données partagée par une pluralité de systèmes embarqués (4), chaque système embarqué (4) étant implémenté dans une plateforme respective (2), chaque système embarqué (4) comprenant une réplique (6) de la base de données, et étant relié à chaque autre système embarqué (4) de la pluralité de systèmes embarqués (4) par une liaison de données, chaque réplique (6) comprenant un ensemble d'éléments, chaque élément comprenant une valeur (VA), un numéro de version (NV) associé à cette valeur (VA), et un nom de source (NS) associé à ce numéro de version (NV), le nom de source (NS) indiquant le nom de la plateforme (2) comprenant le système embarqué (4) générant la valeur (VA) de l'élément selon ledit numéro de version (NV), le procédé de gestion (100) comprenant des étapes de :
- modification (110) de la valeur (VA) d'au moins un élément, dit élément modifié, de l'ensemble d'éléments dans la réplique (6) de la base de données d'un système embarqué (4) de la pluralité de systèmes embarqués, dit système embarqué actif ;
- incrémentation (120) du numéro de version (NV) de l'élément modifié dans la réplique (6) du système embarqué actif ;
- changement (130) du nom de source (NS) de l'élément modifié dans la réplique (6) du système embarqué actif, au nom de la plateforme (2) comprenant le système embarqué actif ayant incrémenté le numéro de version (NV) lors de l'étape d'incrémentation (120) ;
- diffusion (140), par la liaison de données, d'un premier message comprenant au moins le numéro de version (NV) de l'élément modifié, incrémenté lors de l'étape d'incrémentation (120), et le nom de source (NS) de l'élément modifié, changé lors de l'étape de changement (130).

2. Procédé de gestion (100) selon la revendication 1, dans lequel chaque plateforme (2) est un aéronef respectif, la liaison de données étant une liaison sans fil.

3. Procédé de gestion (100) selon la revendication 1 ou la revendication 2, dans lequel, lors de l'étape de modification (110), la valeur (VA) de l'élément modifié est modifiée en fonction d'au moins une donnée courante provenant d'au moins un capteur (3) de la plateforme (2) comprenant le système embarqué actif.

4. Procédé de gestion (100) selon l'une quelconque des revendications précédentes, dans lequel le premier message comprend en outre un numéro de version antérieure dudit élément modifié et un nom de source antérieure, le numéro de version antérieure étant le numéro de version (NV) de l'élément modifié avant la mise en oeuvre de l'étape d'incrémentation (120), le nom de source antérieure étant le nom de source (NS) de l'élément modifié avant la mise en oeuvre de l'étape de changement (130),
le premier message consistant de préférence, pour l'élément modifié, du numéro de version (NV), du nom de source (NS), du numéro de version antérieure et du nom de source antérieure lorsque l'élément modifié est du type élément partagé, modifiable par plusieurs systèmes embarqués (4) de la pluralité de systèmes embarqués.

5. Procédé de gestion (100) selon l'une quelconque des revendications précédentes, comprenant en outre une étape de réception (150) d'un second message par le système embarqué actif, émis d'un système embarqué (4) autre que le système embarqué actif, dit système embarqué tiers, le second message comprenant le numéro de version (NV) de l'élément modifié comme suite à une incrémentation du numéro de version (NV) par le système embarqué tiers, et un numéro de version antérieure correspondant au numéro de version (NV) avant cette incrémentation, le second message comprenant en outre le nom de source (NS) de l'élément modifié comme suite à un changement du nom de source (NS) par le système embarqué tiers, et un nom de source antérieure correspondant au nom de source (NS) avant ce changement,
le procédé de gestion (100) comprenant en outre une étape de mise à jour (160), lors de laquelle le système embarqué actif met à jour sa réplique (6) en fonction du second message.

6. Procédé de gestion (100) selon l'une quelconque des revendications précédentes, dans lequel chaque élément de la base de données est d'un type choisi parmi un élément propriétaire et un élément partagé, l'élément propriétaire étant modifiable uniquement par l'un des systèmes embarqués (4), l'élément partagé étant modifiable par plusieurs systèmes embarqués (4) de la pluralité de systèmes embarqués.

7. Procédé de gestion (100) selon la revendication 6 prise en combinaison avec la revendication 5, dans lequel, lors de l'étape de mise à jour (160) et lorsque l'élément modifié est un élément partagé, le système embarqué actif remplace le numéro de version (NV) et le nom de source (NS) dans sa réplique (6) par le numéro de version (NV) et le nom de source (NS) compris dans le second message lorsqu'à la fois :
- le numéro de version antérieure compris dans le second message est identique au numéro de version (NV) dans la réplique (6) du système embarqué actif, et
- le nom de source antérieure compris dans le second message est identique au nom de source (NS) dans la réplique (6) du système embarqué actif,
sinon le système embarqué actif marquant l'élément modifié comme invalide dans sa réplique (6).

8. Procédé de gestion (100) selon la revendication 6 en combinaison avec la revendication 5 ou selon la revendication 7, dans lequel lorsque l'élément modifié est un élément propriétaire, et modifiable uniquement par le système embarqué tiers, le système embarqué actif modifie l'élément modifié dans sa réplique (6) en fonction du second message, le second message comprenant en outre la valeur (VA) dudit élément modifié.

9. Procédé de gestion (100) selon l'une quelconque des revendications précédentes, comprenant en outre une phase de resynchronisation point-à-point (170), comprenant :
- une étape d'émission (200) d'un message de resynchronisation point-à-point à un système embarqué (4) autre que le système embarqué actif, comprenant le numéro de version (NV) et le nom de source (NS) d'au moins certains éléments dans la réplique (6) du système embarqué actif ;
- une étape de réception (220) d'un message de réponse comprenant le numéro de version (NV) et le nom de source (NS), et de préférence en outre la valeur (VA), de chaque élément dont le numéro de version (NV) ou le nom de source (NS) compris dans le message de resynchronisation point-à-point diffère de celui dans la réplique (6) dudit système embarqué (4) autre que le système embarqué actif ;
- une étape de correction (230), lors de laquelle le système embarqué actif corrige sa réplique (6) en fonction du message de réponse.

10. Procédé de gestion (100) selon la revendication 9, comprenant une étape de détection de perte de connexion (190) de la liaison de données par le système embarqué actif, la phase de resynchronisation point-à-point (170) étant déclenchée lors d'une reconnexion comme suite à la détection de perte de connexion de la liaison de données.

11. Procédé de gestion (100) selon l'une quelconque des revendications précédentes, comprenant en outre une phase de resynchronisation globale, comprenant :
- une étape d'émission (300), à chaque système embarqué (4) de la pluralité de systèmes embarqués (4) autre que le système embarqué actif, d'un message de resynchronisation spécifique au système embarqué (4) respectif, comprenant le numéro de version (NV) et le nom de source (NS) d'au moins certains éléments dans la réplique (6) du système embarqué actif ;
- une étape de réception (320), en provenance de chaque système embarqué (4) autre que le système embarqué actif, d'un message de réponse spécifique à ce système embarqué (4), comprenant le numéro de version (NV) et le nom de source (NS), et de préférence en outre la valeur (VA), de chaque élément dont le numéro de version (NV) ou le nom de source (NS) compris dans le message de resynchronisation spécifique au système embarqué (4) diffère de celui dans la réplique (6) dudit système embarqué (4) ;
- une étape de correction (330), lors de laquelle le système embarqué actif corrige sa réplique (6) en fonction de chaque message de réponse spécifique.

12. Produit programme d'ordinateur comportant des instructions logicielles qui, lorsque mises en oeuvre par un équipement informatique, mettent en oeuvre un procédé de gestion selon l'une quelconque des revendications précédentes.

13. Système embarqué (4) de gestion d'une base de données partagée par une pluralité de systèmes embarqués (4), le système embarqué (4) étant implémenté dans une plateforme (2), comprenant une réplique (6) de la base de données, et étant relié à chaque autre système embarqué (4) de la pluralité de systèmes embarqués (4) par une liaison de données, la réplique (6) comprenant un ensemble d'éléments, chaque élément comprenant une valeur (VA), un numéro de version (NV) associé à cette valeur (VA), et un nom de source (NS) associé à ce numéro de version (NV), le nom de source (NS) indiquant le nom de la plateforme (2) comprenant le système embarqué (4) générant la valeur (VA) de l'élément selon ledit numéro de version (NV),
le système embarqué (4) comprenant un module de traitement (12) configuré pour modifier la valeur (VA) d'au moins un élément, dit élément modifié, de l'ensemble d'éléments dans la réplique (6) de la base de données du système embarqué (4), pour incrémenter le numéro de version (NV) de l'élément modifié dans la réplique (6) du système embarqué (4), et pour changer le nom de source (NS) de l'élément modifié dans la réplique (6), au nom de la plateforme (2) comprenant le système embarqué (4) ayant incrémenté le numéro de version (NV),
le système embarqué (4) comprenant en outre un dispositif d'émission/réception (8) configuré pour diffuser, par la liaison de données, un premier message comprenant au moins le numéro de version (NV) de l'élément modifié, incrémenté par le module de traitement (12), et le nom de source (NS) de l'élément modifié, changé par le module de traitement (12).
